## Europäisches Patentamt

## European Patent Office

## Office européen des brevets

(19)

(11) Numéro de publication: **0 050 058**
**B1**

(12) FASCICULE DE BREVET EUROPEEN

(45) Date de publication du fascicule du brevet: **18.12.85**

(51) Int. Cl.⁴: **H 05 B 41/34,** H 01 S 3/092

(21) Numéro de dépôt: **81401456.9**

(22) Date de dépôt: **18.09.81**

(54) Dispositif d'alimentation d'un tube éclair comprenant un circuit de préionisation.

(30) Priorité: **23.09.80 FR 8020414**

(43) Date de publication de la demande:
**21.04.82 Bulletin 82/16**

(45) Mention de la délivrance du brevet:
**18.12.85 Bulletin 85/51**

(84) Etats contractants désignés:
**DE GB IT**

(56) Documents cités:
**FR-A-2 170 871
FR-A-2 308 271**

(73) Titulaire: **COMMISSARIAT A L'ENERGIE ATOMIQUE Etablissement de Caractère Scientifique Technique et Industriel
B.P. 510
F-75752 Paris Cedex 15 (FR)**

(72) Inventeur: **Bedu, Marcel
7, Impasse Villa des Roses
F-92140 Clamart (FR)**
Inventeur: **Jeanjean, Marcel
19, Allée Galliéni
F-91230 Montgeron (FR)**

(74) Mandataire: **Mongrédien, André et al
c/o BREVATOME 25, rue de Ponthieu
F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention a pour objet un dispositif d'alimentation d'un tube éclair. Elle trouve une application dans le pompage optique des lasers et notamment des lasers à composé iodé.

Dans le but d'améliorer les conditions d'alimentation des tubes éclair utilisés pour le pompage optique des lasers il a déjà été proposé d'utiliser une préionisation. Dans l'art antérieur, cette préionisation était obtenue généralement par une excitation haute fréquence.

Une telle technique présente plusieurs inconvénients. Tout d'abord, elle nécessite l'emploi d'un enroulement bobiné autour du tube éclair, ou disposé au voisinage de celui-ci, et alimenté par un source auxiliaire de tension. Cet enroulement est à l'origine de perturbations apportées aux éléments d'optique qui sont situés à proximité immédiate du tube éclair. En outre, cette technique nécessite une alimentation supplémentaire qui n'est pas de même nature que celle de la décharge principale. Enfin, si sur le plan de la facilité de l'allumage du tube éclair, cette technique donne satisfaction, en revanche elle ne modifie pas sensiblement le rendement d'excitation.

La présente invention a justement pour objet un dispositif qui évite ces inconvénients. A cette fin, ce dispositif est conçu pour éviter toute intervention sur le tube éclair lui-même, touts les éléments du dispositif pouvant être rassemblés au niveau des circuits d'alimentation. En outre, le dispositif de l'invention conduit à une augmentation considérable de rendement de pompage des lasers qui travaillent par absorption de rayonnement ultra-violet, car il provoque et cela de façon surprenante, une augmentation importante de l'intensité du rayonnement émis par le tube éclair dans la région située aux alentours de 2700 Å. Enfin, le dispositif de l'invention est d'une grande simplicité.

Ces résultats sont obtenus par l'utilisation de moyens particuliers pour effectuer la préionisation. De façon précise, l'invention a pour objet un dispositif d'alimentation de tube éclair qui comprend de manière connue, un condensateur, une source de tension continue reliée à ce condensateur, un comutateur d'énergie disposé entre le condensateur et le tube éclair, un circuit apte à émettre une impulsion de commande de ce commutateur et un circuit de préionisation du tube éclair; et il est caractérisé en ce que ce circuit de préionisation comprend un second commutateur d'énergie relié au condensateur à travers une résistance ajustable ainsi qu'au tube éclair, et un second circuit apte à émettre une impulsion de commande de ce second commutateur, cette seconde impulsion étant en avance par rapport à la première.

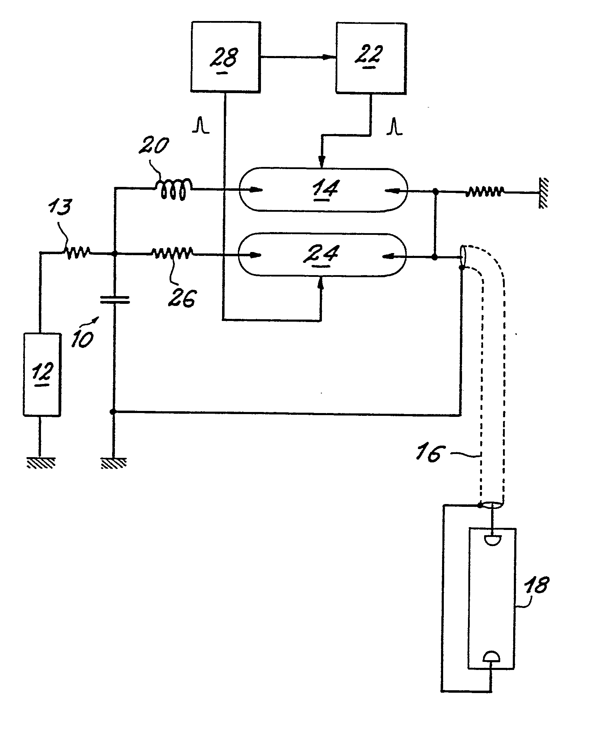

La figure unique annexée illustre un mode particulier de réalisation d'un dispositif conforme à l'invention. Tel que représenté le dispositif comprend un condensateur 10 chargé par un source 12 de tension continue à travers une résistance 13, un premier commutateur d'énergie 14 (du genre éclateur à deux électrodes principales et une électrode de déclenchement), ce commutateur étant relié au condensateur et, par une ligne coaxiale 16, à un tube éclair 18. L'enroulement 20 représente l'inductance répartie du circuit. Le commutateur 14 est commandé par un circuit 22 apte à émettre par exemple une impulsion brève et de très haute tension appliquée sur l'électrode de déclenchement du commutateur. Le dispositif représenté comprend encore des moyens pour effectuer une préionisation du tube éclair, ces moyens comprenant un second commutateur d'énergie 24, relié au condensateur 10 par une résistance ajustable 26 et au tube éclair par la ligne coaxiale 16 servant à la décharge principale. Ce second commutateur est commandé par un circuit 28 apte à émettre une impulsion brève de très haute tension, qui précède l'impulsion émise par le circuit 22.

Le fonctionnement de ce dispositif est le suivant. La tension de charge du condensateur 10 est réglée un peu au-dessus de la valeur optimale choisie pour la décharge principale. Une préionisation dans le tube éclair est d'abord déclenchée au moyen du circuit 28 commandant le commutateur 24. L'énergie nécessaire à la préionisation est prise sur l'énergie de stockage du condensateur 10, Après une durée predéterminée, le commutateur 14 est commandé au moyen du circuit 22 et la décharge principale a lieu.

A titre d'exemple, il est possible d'emmagasiner 5 kJ à 40 kV dans le condensateur 10, de provoquer un courant de préionisation de 400 mA et, au bout de 40 ms, de déclencher la décharge principale qui s'alimentera sur l'énergie restante (4,5 kJ) à tension plus faible (38 kV).

Le courant de préionisation peut être réglé par la résistance 26. L'écart entre les instants de déclenchement des impulsions de commande des commutateurs 14 et 24 peut être obtenu et réglé à l'aide d'un circuit à retard disposé dans le circuit 22 et alimenté par le circuit 28.

L'analyse du rayonnement émis par un tube éclair alimenté par le dispositif qui vient d'être décrit révèle que le plasma naît au centre du tube et se développe vers la périphérie tout en présentant une bonne homogénéité, alors que, sans préionisation, le plasma naît de manière erratique au voisinage des parois du tube et se développe vers le centre de manière non uniforme.

Une analyse spectroscopique montre que, dans la plage allant de 2500 à 2900 Å, l'intensité du rayonnement est augmentée d'environ 60% par la préionisation obtenue par le dispositif de l'invention, sans qu'il y ait apparition de nouvelles raies, ni disparition d'anciennes.

En plus des avantages déjà soulignés, le dispositif de l'invention en présente un autre qui est celui de permettre aisément la détection d'anomalies dans le circuit de décharge, par simple examen du courant de préionisation. Si celui-ci apparaît comme anormal, le déclenchement du commutateur principal est bloqué.

Naturellement, les moyens décrits dans le cas de l'alimentation d'un seul tube éclair peuvent être aisément modifiés pour obtenir une alimentation de plusieurs tubes éclair.

L'invention est particulièrement avantageuse dans le cas du pompage optique des composés gazeux à base de $C_3F_7I$ mélange à une gaz d'appoint comme l'argon, l'azote ou le gaz carbonique. La longueur d'onde d'émission est alors de 1,315 μm.

**Revendication**

Dispositif d'alimentation d'un tube éclair (18) comprenant un condensateur (10), une source de tension continue (12) reliée à ce condensateur, un commutateur d'énergie (14) disposé entre le condensateur et le tube éclair, un circuit (22) apte à émettre une impulsion de commande de ce commutateur et un circuit de préionisation du tube éclair, caractérisé en ce que ce circuit de préionisation comprend un second commutateur d'énergie (24) relié au condensateur à travers une résistance ajustable (26) ainsi qu'au tube éclair, et un second circuit (28) apte à émettre une impulsion de commande de ce second commutateur, cette seconde impulsion étant en avance par rapport à la première.

**Patentanspruch**

Speiseschaltung für eine Blitzlampe (18) mit einem Kondensator (10), einer mit diesem Kondensator verbundenen Gleichspannungsquelle (12), einem zwischen dem Kondensator und der Blitzlampe angeordneten Energieschalter (14), einer Schaltung (22), mit der ein Steuerimpuls für diesen Schalter erzeugbar ist, und einer Vorionisationsschaltung für die Blitzlampe, dadurch gekennzeichnet, daß diese Vorionisationsschaltung einen zweiten Energieschalter (24), der mit dem Kondensator über einen einstellbaren Widerstand (26) sowie mit der Blitzlampe verbunden ist, und eine zweite Schaltung (28) umfaßt, mit der ein Steuerimpuls für diesen zweiten Schalter erzeubar ist, wobei dieser zweite Impuls in Bezug auf den ersten vorausgeht.

**Claim**

Supply circuit for a flash tube (18) comprising a condenser (10), a continuous potential source (12) connected to said condenser, an energy switch (14) located between the condenser and the flash tube, a circuit (22) adapted to emit a command pulse for the switch and a preionization circuit for the flash tube, characterized in that the preionization circuit comprises a second energy switch (24) connected to the condenser across an adjustable resistance (26) and connected to the flash tube, and a second circuit (28) adapted to emit a command pulse for the second switch, said second pulse being ahead of the first pulse.